# EUROPÄISCHE PATENTSCHRIFT

(11) **EP 2 165 085 B1**
(45) Veröffentlichungstag und Bekanntmachung des Hinweises auf die Patenterteilung: **13.10.2010**
(21) Anmeldenummer: 08750288.6
(22) Anmeldetag: 14.05.2008
(51) Int. Cl.: F16C 35/02

(54) **PUMPE FÜR EIN HAUSHALTSGERÄT**
PUMP FOR A HOUSEHOLD APPLIANCE
POMPE POUR UN APPAREIL ELECTROMENAGER

(30) Priorität: 31.05.2007 DE 102007025402
(43) Veröffentlichungstag der Anmeldung: 24.03.2010
(73) Patentinhaber: BSH Bosch und Siemens Hausgeräte GmbH, 81739 München (DE)
(72) Erfinder: KALAVSKY, Michal, 040 23 Kosice (SK)
(86) Internationale Anmeldenummer: PCT/EP2008/055914
(87) Internationale Veröffentlichungsnummer: WO 2008/145521

(56) Entgegenhaltungen:
- AT-B- 92 732
- DE-B- 1 098 820

## Beschreibung

Die Erfindung bezieht sich auf eine Pumpe für ein Haushaltsgerät mit einem Nassläufermotor gemäß dem Oberbegriff des Anspruchs 1.

In verschiedenen Geräten, insbesondere Haushaltsgeräten, werden Nassläufermotoren eingesetzt, beispielsweise als Antriebsmotoren für Pumpen. Bei solchen Pumpen kann in den Rotorraum des Antriebsmotors ein Teil der zu pumpenden Flüssigkeit eindringen, so dass der Rotor des Antriebsmotors in dieser Flüssigkeit läuft. Diese Flüssigkeit kann auch dazu genutzt werden, das bzw. die Wellenlager zu schmieren. Trotzdem kann es vorkommen, dass in dem Rotorraum bzw. im Bereich des Wellenlagers Luft verbleibt, so dass das Wellenlager trocken läuft, was zu einem erhöhten Verschleiß des Wellenlagers führt.

In der Auslegeschrift DE 1 098 820 ist eine mehrstufige Kreiselpumpe mit mehreren Pumpenrädern offenbart, bei der ein Teil des Pumpmediums in den Rotorraum eintritt. Von dem Rotorraum gelangt die Flüssigkeit durch einen Kanal im pumpenfernen hinteren Lagerschild in einen Hohlkanal der Welle, der über einen seitlichen Ausgang in das zweites Pumpenrad mündet. Die Flüssigkeit durchsetzt auch das pumpenferne Lager der Welle, wodurch dieses geschmiert wird. Allerdings ist es kostspielig eine Welle mit einem Hohlkanal auszubilden. Des weiteren muss in diesem Fall genügend Flüssigkeit in den Rotorraum nachströmen, damit die durch den Hohlkanal der Welle abfließende Flüssigkeit ersetzt wird und das Wellenlager nicht trocken läuft. Dadurch ist wiederum die Wahrscheinlichkeit erhöht, dass Schmutzpartikel des Pumpmediums mit der Flüssigkeit in den Rotorraum gelangen und dort Blockaden bzw. Schäden verursachen.

Der vorliegenden Erfindung liegt die Aufgabe zugrunde, eine kostengünstige pumpe mit hoher Lebensdauer zur Verfügung zu stellen.

Gelöst wird die vorstehend aufgezeigte Aufgabe durch eine pumpe mit den Merkmalen des Anspruchs 1. Vorteilhafte sowie bevorzugte Ausgestaltungen der Erfindung sind Gegenstand der abhängigen Ansprüche.

Bei einer pumpe der eingangs genannten Art, ist erfindungsgemäß an dem Lagerschild und/oder an der Aufnahme des Wellenlagers ein Umlenkelement angeformt, das zur Umlenkung des Fluids in den Kanal dient. Auf diese Weise kann auch in dem Fall, dass nur eine geringe Menge des Fluids das Lagerschild erreicht, dieses in den Kanal umgeleitet werden. Somit wird trotz der geringen Menge des zur Verfügung stehenden Fluids der Zwischenraum von dem Fluid durchströmt und das Wellenlager und/oder die Welle von dem Zwischenraum aus durch das Fluid geschmiert, so dass ein Trockenlaufen des Wellenlagers verhindert wird. Des weiteren kann die Welle und/oder das Wellenlager durch das Fluid gekühlt werden, so dass ein Heißlaufen der Welle bzw. des Wellenlagers vermieden wird.

Das Lagerschild wird zur Lagerung der Welle eines Nassläufermotors eingesetzt. Der Nassläufermotor weist einen Rotorraum auf, in dem sich der Rotor des Nassläufermotors in dem Fluid dreht, und der von einem Rotorgehäusemantel und dem Lagerschild begrenzt ist. Der Kanal ist zu dem Rotorraum hin offen, so dass das Fluid, das mit dem Rotor des Nassläufers in dem Rotorraum rotiert und das das Lagerschild erreicht, von dem Rotorraum in den Kanal eindringen kann.

Das Umlenkelement ist an die Strömungsrichtung des Fluids im Rotorraum angepasst, so dass eine verbesserte Durchspülung des Zwischenraums zwischen Welle bzw. Wellenlager und Lagerschild erzeugt wird. Dies verbessert wiederum die Entlüftung des Zwischenraums, sowie die Kühlung bzw. Schmierung des Wellenlagers und der Welle.

Erfindungsgemäß erstreckt sich das Umlenkelement von dem Kanal bis zu einem äußeren Rand des Lagerschildes. An diesem äußeren Rand des Lagerschilds schließt sich der Rotorgehäusemantel des Rotorraumes an das Lagerschild an. Wenn der Rotorraum nicht vollständig sondern nur teilweise mit dem Fluid gefüllt ist, wird das mit dem Rotor rotierende Fluid aufgrund der Zentrifugalkraft nach außen an den Rotorgehäusemantel gedrückt. Von dort wird zumindest ein Teil des Fluids durch das Umlenkelement in den Kanal gelenkt. Somit wird auch in diesem Fall das Wellenlager mit genügend Schmierflüssigkeit versorgt, so dass ein Trockenlaufen des Wellenlagers vermieden wird.

Wird das Lagerschild bei einem Nassläufermotor eingesetzt, der in beiden Drehrichtungen des Rotors betrieben wird, so kann das Fluid in dem von dem Lagerschild begrenzten Rotorraum in beiden Drehrichtungen des Rotors rotieren. Daher hat es sich in diesem Fall als vorteilhaft erwiesen, das Umlenkelement an dem Lagerschild mittig zu dem Kanal anzuordnen. Bevorzugt ist zusätzlich an den Kanal anschließend ein Führungselement angeordnet, insbesondere angeformt, das zur Leitung des Fluids in den Kanal dient. Auf diese Weise wird für beide Drehrichtungen ein Anteil des Fluids durch das Umlenkelement umgelenkt und über das Führungselement in den Einlasskanal geleitet.

Erfindungsgemäß weist das Umlenkelement zumindest eine gekrümmte Prallwand zur Umlenkung des Fluids auf. Diese Prallwand ist je nach Anwendungsfall derart ausgebildet, dass das Fluid entlang einer konvexen oder konkaven Fläche der Prallwand in den Kanal geleitet wird. Dadurch werden Turbulenzen des Fluids vor oder in dem Kanal weitestgehend vermieden, so dass das Fluid ungehindert in und durch den Kanal strömen kann.

Gemäß einer bevorzugten Ausführungsform weist das Lagerschild mehrere Kanäle auf, wobei die Aufnahme für das Wellenlager mehrere Segmente aufweist, die derart ringförmig nebeneinander angeordnet sind, dass jeweils zwischen zwei nebeneinander angeordneten Segmenten einer der Kanäle gebildet ist. Insbesondere sind die Segmente mit einem Abstand zwischen einander angeordnet, wobei der Abstand die Breite des Kanals definiert. D.h. je nach Anzahl der Segmente können mehrere Kanäle gebildet werden, durch die das Fluid, das insbesondere eine Flüssigkeit ist, bis zu dem Wellenlager bzw. der Welle vordringen kann, wodurch die Zuverlässigkeit der Schmierung und/oder der Kühlung des Wellenlagers bzw. der Welle verbessert wird. Diese kann auch durch die Anzahl und den Abstand zwischen zwei nebeneinander angeordneten Segmenten auf einfache und kostengünstige Weise an den jeweiligen Anwendungsfall angepasst werden. Darüber hinaus ist die Umströmung des Wellenlagers bzw. der Welle auch bei Wellen gewährleistet, die keine Hohlwellen sind bzw. die keine Durchbohrung aufweisen.

Gemäß einer bevorzugten Ausführungsform ist der Kanal, insbesondere über seine gesamte Breite, zu dem Wellenlager hin offen. Auf diese Weise wird das Wellenlager zumindest in Teilbereichen seiner Außenfläche von dem Fluid umspült, so dass das Wellenlager durch das Fluid besonders gut gekühlt und/oder geschmiert werden kann.

Der Kanal ist insbesondere in Form einer Nut ausgebildet, wobei durch jedes der zwei nebeneinander angeordneten Segmente jeweils eine Nutwange der Nut gebildet ist. Vorzugsweise erstreckt sich der Kanal in Bezug auf die Welle in radialer Richtung und/oder axialer Richtung über die gesamte Ausdehnung der zwei nebeneinander angeordneten Segmente. Da die Segmente an einer der Welle zugewandten Innenwand des Lagerschildes angeordnet sind, kann diese Innenwand daher einen Nutgrund der Nut bilden. Die Nut kann einen beliebig geformten Querschnitt aufweisen. Vorteilhafterweise ist der Querschnitt so groß gewählt, dass der Strömungswiderstand für das Fluid gering ist, so dass zur Kühlung des Wellenlagers und/oder der Welle ein genügender Wärmeabtransport durch das Fluid gewährleistet ist.

Vorzugsweise ist zumindest einer der durch die Segmente gebildeten Kanäle ein Einlasskanal, der für das Fluid als Einlass in den Zwischenraum dient, und zumindest einer der Kanäle ein Auslasskanal, der für das Fluid als Auslass aus dem Zwischenraum dient. Dabei ist der Auslasskanal insbesondere fluchtend zu dem Einlasskanal angeordnet. Das bedeutet auch, dass in Bezug auf das Wellenlager der Einlasskanal und der Auslasskanal gegenüberliegend angeordnet sind. Durch diese Anordnung ist der Strömungswiderstand besonders gering und Turbulenzen des Fluids werden in dem Zwischenraum reduziert, so dass das Fluid den Zwischenraum ungehindert durchströmen kann. Auf diese Weise wird der Durchfluss des Fluids durch den Zwischenraum verbessert und Luft, die sich möglicherweise in dem Zwischenraum befindet, wird von dem Fluid verdrängt. D. h. die Entlüftung des Zwischenraums ist gewährleistet, wodurch ein Trockenlaufen des Wellenlagers vermieden wird. Des weiteren wird durch das Durchspülen des Zwischenraums auch der Abtransport von Wärme verbessert, d.h. ein Heißlaufen des Wellenlager bzw. der Welle wird verhindert.

Durch die Anzahl der Kanäle und deren Anordnung bzw. deren Querschnitt kann die Entlüftung des Zwischenraums und/oder die Kühlung und/oder die Schmierung des Wellenlagers und/oder der Welle auf einfache und kostengünstige Weise an den jeweiligen Anwendungsfall angepasst werden. Als vorteilhaft hat sich für die Anwendung des Lagerschildes bei einer Pumpe für Haushaltsgeräte eine Aufnahme des Wellenlagers herausgestellt, die vier Segmenten aufweist, wobei durch die vier Segmente vier Kanäle gebildet sind, und wobei einer der vier Kanäle der Einlasskanal ist und die anderen drei Kanäle Auslasskanäle sind.

Es ist auch möglich, die Segmente derart auszubilden, dass sie zur Befestigung des Wellenlagers dienen. Insbesondere weisen die Segmente auf ihrer dem Wellenlager zugewandten Seite eine Einkerbung zur Aufnahme eines Klemmrings auf, durch welchen das Wellenlager in der durch die Segmente gebildete Aufnahme befestigbar ist. Dieser Klemmring kann insbesondere als O-Ring ausgebildet sein. Auf diese Weise ist eine besonders einfache und kostengünstige Montage des Wellenlagers, das insbesondere als Gleitlager ausgebildet ist, in dem Lagerschild möglich.

Besonders einfach und kostengünstig gestaltet sich die Montage, wenn die Segmente an dem Lagerschild angeformt sind. Auf diese Weise kann das Lagerschild mit den Segmenten beispielsweise durch ein Spritzguss-, ein Press- oder ein Gussverfahren gefertigt werden. Es ist allerdings auch in einer alternativen Ausführungsform möglich, die Segmente an dem Lagerschild zu befestigen, z. B. durch Rast-, Kleb- oder Schweißverbindungen.

Das Lagerschild ist mit dem Rotorgehäuse des Nassläufermotors bzw. der Pumpe einstückig ausgebildet sein. Beispielsweise in Form eines topfförmigen Lagerschilds. Dies hat den Vorteil, dass keine Dichtungen zwischen dem Lagerschild und dem Rotorgehäuse nötig sind, wodurch sich die Anzahl der Bauteile und damit die Fertigungskosten des Nassläufermotors bzw. der Pumpe reduzieren.

Bei einem Nassläufermotor mit einer anzutreibenden Einheit, wie einer Pumpe, wird das Lagerschild bevorzugt für die Lagerung desjenigen Wellenendes eingesetzt, das der anzutreibenden Einheit abgewandt ist. So wird also bevorzugt das pumpenabgewandte Wellenende in dem erfindungsgemäßen Lagerschild gelagert. In diesem Fall kann das Lagerschild geschlossen, d.h. ohne Durchbruch für die Welle ausgebildet werden.

Generell kann bei verschiedensten Geräten, insbesondere bei Haushaltsgeräten, durch Verwendung des Lagerschildes die Lebensdauer von Nassläufermotoren verlängert werden. Eine erfindungsgemäße Pumpe mit dem Lagerschild kann beispielsweise bei einer Waschmaschine oder einer Geschirrspülmaschine eingesetzt werden.

Ausführungsbeispiele der Erfindung werden nachstehend anhand der Zeichnung näher erläutert:
- Fig. 1: zeigt eine schematische Schnittansicht durch einen Nassläufermotor einer Pumpe mit einem Lagerschild gemäß einem erfindungsgemäßen Ausfüh- rungsbeispiel,
- Fig. 2: zeigt eine Ansicht des Rotorraums des Nassläufermotors gemäß Figur 1 schräg von der Pumpenkammer aus mit einer ersten Ausführungsform des Lagerschildes,
- Fig. 3: zeigt eine schematische Draufsicht auf den Rotorraum gemäß Figur 2 mit durch Pfeile angegebenen Strömungsrichtungen,
- Fig. 4: zeigt eine Ansicht des Rotorraums des Nassläufermotors gemäß Figur 1 schräg von der Pumpenkammer aus mit einer zweiten Ausführungsform des Lagerschildes,
- Fig. 5: zeigt eine schematische Draufsicht auf den Rotorraum gemäß Figur 4 mit durch Pfeile angegebenen Strömungsrichtungen.

Bevor auf die Zeichnungen näher eingegangen wird, sei angemerkt, dass einander entsprechende oder gleiche Elemente bzw. Einzelteile in den Zeichnungsfiguren durch gleiche Bezugszeichen bezeichnet sind.

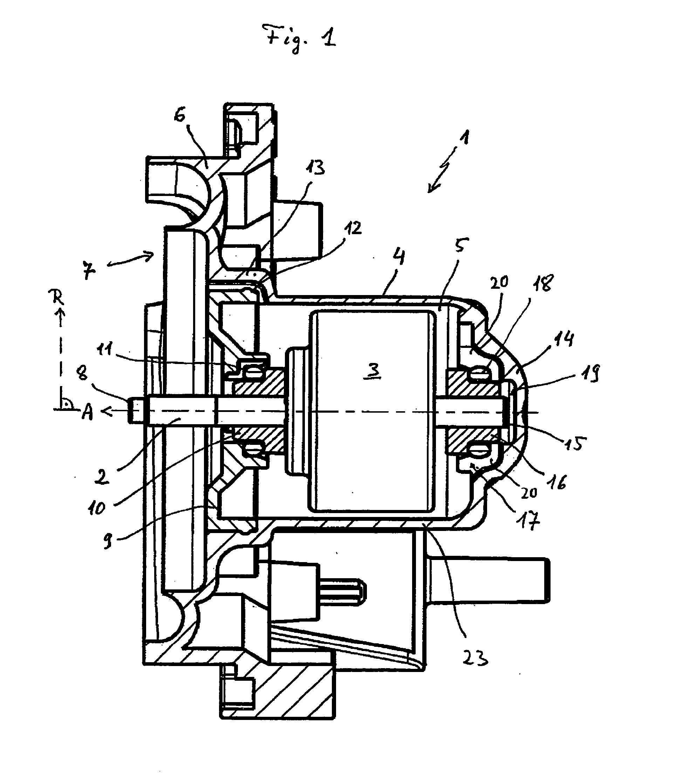

In Fig. 1 ist ein schematischer Querschnitt durch einen Nassläufermotor 1 einer Pumpe gemäß einem Ausführungsbeispiel der Erfindung gezeigt. Der Nassläufermotor 1 weist eine Welle 2 mit einem Rotor 3 auf, der in einem topfförmigen Rotorgehäuse 4 angeordnet ist. Durch die Welle 2 ist eine axiale Richtung A entlang der Achse der Welle 2 und eine radiale Richtung R entlang eines Radius der Welle 2 definiert. Das Rotorgehäuse 4 begrenzt einen Rotorraum 5, in dem sich der Rotor 3 drehen kann. Durch das Rotorgehäuse 4 ist der Rotorraum 5 gegenüber einem Stator (nicht gezeigt) des Nassläufermotors 1 getrennt. Insbesondere ist das Rotorgehäuse 4 gegenüber Flüssigkeiten dicht ausgebildet, so dass eine Flüssigkeit, die sich in dem Rotorraum 5 befindet, den Stator nicht benetzen kann. An dem Rotorgehäuse 4 ist ein Teil des Pumpengehäuses 6 angeformt, das zusammen mit einem Gehäusedeckel (nicht gezeigt) eine Pumpenkammer 7 bildet. In der Pumpenkammer 7 ist üblicherweise ein Pumpenrad (nicht gezeigt) drehbar angeordnet, durch welches eine zu pumpende Flüssigkeit durch die Pumpenkammer 7 gepumpt wird. Das Pumpenrad ist dann in der Pumpenkammer 7 an dem pumpenseitigen Wellenende 8 der Welle 2 befestigt. Zwischen der Pumpenkammer 7 und dem Rotorraum 5 ist ein Lagerträger 9 angeordnet, in dem ein pumpenseitiges Wellenlager 10, in Form eines Gleitlagers, mit Hilfe eines vorderen O-Rings 11 befestigt ist. Die Welle 2 ist in diesem pumpenseitigen Wellenlager 10 gelagert und erstreckt sich durch den Lagerträger 9 hindurch bis in die Pumpenkammer 7. Der Lagerträger 9 ist beispielsweise mit dem Rotorgehäuse 4 verrastet und dichtet den Rotorraum 5 weitestgehend gegenüber Schmutzpartikel der zu pumpenden Flüssigkeit ab.

Während des Pumpvorgangs tritt ein Teil der Flüssigkeit durch das pumpenseitige Wellenlager 10 in den Rotorraum 5 ein. Um den Rotorraum 5 noch weiter zu entlüften, ist zwischen der Pumpenkammer 7 und dem Rotorraum 5 zumindest ein Durchgangskanal 12 vorgesehen. Es können aber auch mehrere Durchgangskanäle 12 vorhanden sein. Dieser Durchgangskanal 12 kann in dem Lagerträger 9, in der Gehäusewand 13 des Rotorgehäuses 4 bzw. des angeformten Pumpengehäuses 6 oder zwischen dem Lagerträger 9 und der Gehäusewand 13 ausgebildet sein. Der Durchgangskanal 12 weist einen geringen Durchmesser bzw. Durchschnitt auf, so dass ein Eintritt von in der Flüssigkeit transportierten Schmutzpartikel in den Rotorraum 5 weitestgehend verhindert wird.

An der pumpenabgewandten Seite des Rotors 3 ist der Rotorraum 5 durch ein an dem Rotorgehäuse 4 angeformtes Lagerschild 14 abgeschlossen. In dem Lagerschild 14 ist das pumpenferne Wellenende 15 der Welle 2 in einem pumpenfernen Wellenlager 16, das beispielsweise ein Gleitlager ist, drehbar gelagert. Dieses Wellenlager 16 ist in einer Aufnahme 17 des Lagerschildes 14 mit einem hinteren O-Ring 18 befestigt. Die Ausgestaltung der Aufnahme 17 wird weiter unten ausführlich erläutert. Zwischen dem pumpenfernen Wellenende 15 und dem Lagerschild 14 bzw. zwischen dem pumpenfernen Wellenlagerschild 16 und dem Lagerschild 14 befindet sich innerhalb der Aufnahme 17 ein Zwischenraum 19. Dieser Zwischenraum 19 ist mit dem Rotorraum 5 über Kanäle 20 verbunden, die im folgenden genauer beschrieben werden.

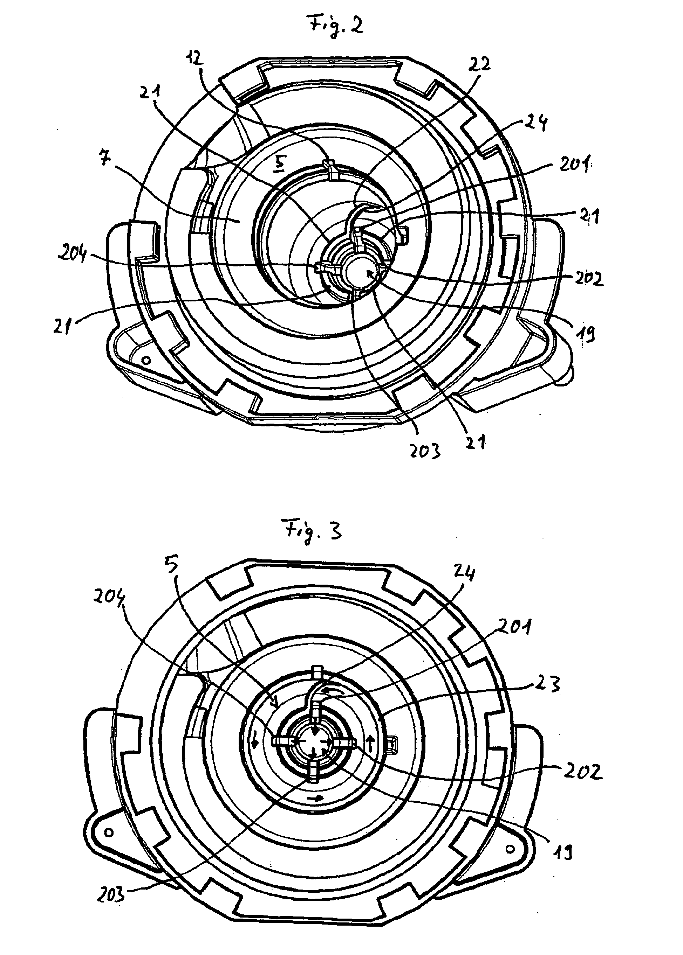

In Fig. 2 ist eine schematische Ansicht des Rotorraums 5 des Nassläufermotors 1 gemäß Figur 1 schräg von der Pumpenkammer 7 aus mit einer ersten Ausführungsform des Lagerschildes 14 gezeigt. Von der Pumpenkammer 7 aus erstreckt sich ein Durchgangskanal 12 in den Rotorraum 5. An dem der Pumpenkammer 7 angewandten Ende des Rotorraums 5 ist an dem Lagerschild 14 die Aufnahme 17 des pumpenfernen Wellenlagers 16 aus vier Segmenten 21 gebildet. Diese vier Segmente 21 sind in Form eines Ringes gruppiert, wobei jeweils zwei Segmente 21 nebeneinander mit einem Abstand zueinander angeordnet sind, so dass zwischen ihnen jeweils ein Kanal 201, 202, 203, 204 ausgebildet ist. An einem der Segmente 21 ist ein gebogenes Umlenkelement 22 angeformt, dass sich von dem Segment 21 über das Lagerschild 14 bis zu dem Mantel 23 des Rotorgehäuses 4 erstreckt.

In Fig. 3 ist eine schematische Draufsicht auf den Rotorraum 5 gemäß Figur 2 mit durch Pfeile angegebenen Strömungsrichtungen gezeigt. Die in den Rotorraum 5 eingedrungene Flüssigkeit rotiert gegen den Uhrzeigersinn und wird durch die Zentrifugalkraft von dem Rotor 3 bzw. der Welle 2 weg an den Mantel 23 des Rotorgehäuses 4 gedrückt. Da das Umlenkelement 22 sich von dem Einlasskanal 201 bis zu dem Rotorgehäuse 4 erstreckt, wird ein Teil der Flüssigkeit über eine konkave Prallwand 24 des Umlenkelements 22 in den Einlasskanal 201 hinein gelenkt. Von dort breitet sich die eindringende Flüssigkeit in den Zwischenraum 19 zwischen Welle 2 und Lagerschild 14 bzw. zwischen Wellenlager 16 und Lagerschild 14 aus. Von dem Zwischenraum 19 aus wird das Wellenlager 16 und auch die Welle 2 durch die Flüssigkeit benetzt und dadurch geschmiert und/oder gekühlt. Durch die über den Einlasskanal 201 weiterhin zugeführte Flüssigkeit wird die Flüssigkeit aus dem Zwischenraum 19 durch die Ausgangskanäle 202, 203, 204 wieder in den Rotorraum 5 gedrückt.

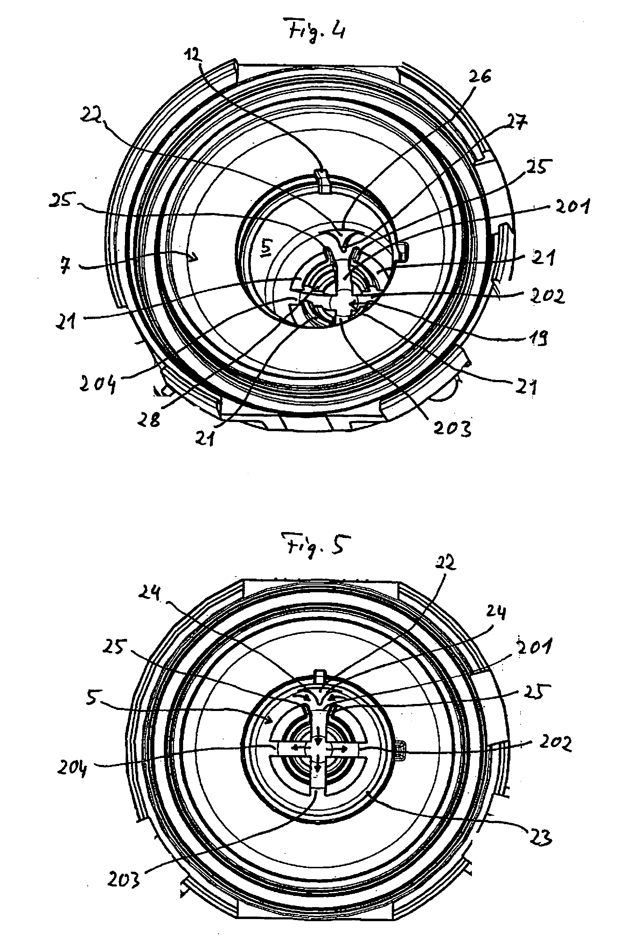

In Fig. 4 ist eine Ansicht des Rotorraums 5 des Nassläufermotors 1 gemäß Figur 1 schräg von der Pumpenkammer 7 aus mit einer zweiten Ausführungsform des Lagerschildes 14 gezeigt. Hier besteht die Aufnahme 17 für das pumpenferne Wellenlager 16 wiederum aus vier Segmenten 21. Die zwischen zwei benachbart angeordneten Segmenten 21 ausgebildeten Kanäle 201, 202, 203 und 204 erstrecken sich sowohl in axialer Richtung A wie auch in radialer Richtung R über die gesamte Ausdehnung der Segmente 21. An den beiden Segmenten 21, die den Einlasskanal 201 bilden, ist jeweils ein Führungselement 25 ausgebildet. Mittig zu dem Einlasskanal 201 ist an dem Lagerschild ein Umlenkelement 22 angeformt, das sich bis zu dem Mantel 23 des Rotorgehäuses 4 erstreckt. Dieses Umlenkelement 22 liegt mit einer breiten Basis 26, die der Krümmung des Rotorgehäuses 4 folgt, an dem Mantel 23 des Rotorgehäuses 4 an. Von den Enden dieser Basis 26 aus laufen zwei konkav gebogene Prallwände 24 aufeinander zu und treffen sich in einer Spitze 27 des Umlenkelements 22, die mittig zwischen den Enden der beiden Führungselemente 25 positioniert ist. Des weiteren weisen die Segmente 21 eine Einkerbung 28 auf, die für die Aufnahme des hinteren O-Rings 18 ausgebildet ist, durch den das pumpenferne Wellenlager 16 in der Aufnahme 17 festgeklemmt werden kann.

In Fig. 5 ist eine schematische Draufsicht auf den Rotorraum gemäß Figur 4 mit durch Pfeile angegebenen Strömungsrichtungen gezeigt. Die in den Rotorraum 5 eingedrungene Flüssigkeit kann entweder mit dem Uhrzeigersinn oder gegen den Uhrzeigersinn rotieren. Für beide Drehrichtungen wird die in den Rotorraum 5 eingedrungene Flüssigkeit durch die Zentrifugalkraft von dem Rotor 3 bzw. der Welle 2 weg an den Mantel 23 des Rotorgehäuses 4 gedrückt. Je nach Drehrichtung prallt die Flüssigkeit auf eine andere der beiden Prallwände 24 des Umlenkelements 22. D.h. die Ausführungsform des Lagerschilds gemäß Figur 4 und 5 ist für einen Nassläufermotor 1 geeignet, der in beiden Drehrichtungen betrieben werden kann. Da das Umlenkelement 22 sich von dem Einlasskanal 201 bis zu dem Rotorgehäuse 4 erstreckt, wird ein Teil der Flüssigkeit über die jeweilige konkave Prallwand 24 des Umlenkelements 22 und über das jeweilige Führungselement 25 in den Einlasskanal 201 hinein gelenkt. Von dort breitet sich die eindringende Flüssigkeit analog zu der Ausführungsform gemäß Figur 2 und 3 in den Zwischenraum 19 zwischen Welle 2 und Lagerschild 14 bzw. zwischen Wellenlager 16 und Lagerschild 14 aus, schmiert und/oder kühlt das Wellenlager 16 bzw. die Welle 2 und verlässt den Zwischenraum 19 durch die Ausgangskanäle 202, 203, 204 wieder.

### Bezugszeichenliste

- 1: Nassläufermotor
- 2: Welle
- 3: Rotor
- 4: Rotorgehäuse
- 5: Rotorraum
- 6: Pumpengehäuse
- 7: Pumpenkammer
- 8: pumpenseitiges Wellenende
- 9: Lagerträger
- 10: pumpenseitiges Wellenlager
- 11: vorderer O-Ring
- 12: Durchgangskanal
- 13: Gehäusewand
- 14: Lagerschild
- 15: pumpenfernes Wellenende
- 16: pumpenfernes Wellenlager
- 17: Aufnahme des pumpenfernen Wellenlagers
- 18: hinterer O-Ring
- 19: Zwischenraum
- 20: Kanal
- 201: Einlasskanal
- 202: Auslasskanal
- 203: Auslasskanal
- 204: Auslasskanal
- 21: Segment
- 22: Umlenkelement
- 23: Mantel des Rotorgehäuses
- 24: Prallwand des Umlenkelements
- 25: Führungselement
- 26: Basis des Umlenkelements
- 27: Spitze des Umlenkelements
- 28: Einkerbung zur Aufnahme des hinteren O-Rings
- A: axiale Richtung
- R: radiale Richtung

## Patentansprüche

1. Pumpe für ein Haushaltsgerät mit einem Nassläufermotor (1), der einen Rotorraum (5) aufweist, in dem sich eine Welle (2) mit einem Rotor (3) in einem Fluid dreht, wobei der Rotorraum (5) von einem Rotorgehäusemantel (23) und von einem Lagerschild (14) zur Lagerung der Welle (2) begrenzt ist, wobei in dem Lagerschild (14) das pumpenabgewandte Ende (15) der Welle (2) gelagert ist, wobei das Lagerschild (14) mit dem Rotorgehäuse (4) einstückig ausgebildet ist, wobei das Lagerschild (14) eine Aufnahme (17) für ein Wellenlager (16) aufweist, die das Wellenlager (16) an seiner äußeren Mantelfläche umgibt, wobei das Lagerschild einen Kanal (20) zu einem zwischen Wellenende (15) und Lagerschild (14) und/oder zwischen Wellenlager (16) und Lagerschild (14) gebildeter Zwischenraum (19) aufweist, wobei der Kanal (20, 201, 202, 203, 204) zu dem Rotorraum (5) hin offen ist und von dem Fluid durchströmbar ist, das sich in dem Rotorraum (5) befindet, **dadurch gekennzeichnet, dass** an dem Lagerschild (14) und/oder an der Aufnahme (17) ein Umlenkelement (22) angeformt ist, das zur Umlenkung des Fluids in den Kanal (20, 201) dient, dass sich das Umlenkelement (22) von dem Kanal (20, 201) bis zu einem äußeren Rand des Lagerschilds (14) erstreckt, dass sich an den äußeren Rand des Lagerschilds (14) der Rotorgehäusemantel (23) des Rotorraums (5) anschließt, an den das mit dem Rotor (3) rotierende Fluid aufgrund einer Zentrifugalkraft gedrückt wird, und dass das Umlenkelement (22) an eine Strömungsrichtung des Fluids in dem Rotorraum (5) durch zumindest eine gekrümmte Prallwand (24) angepasst ist.

2. Pumpe nach Anspruch 1, **dadurch gekennzeichnet, dass** das Umlenkelement (22) an dem Lagerschild (14) mittig zu dem Kanal (201) angeordnet ist.

3. Pumpe nach Anspruch 1 oder 2, **dadurch gekennzeichnet, dass** an den Kanal (20, 201) anschließend ein Führungselement (25) angeordnet, insbesondere angeformt ist, das zur Leitung des Fluids in den Kanal (20, 201) dient.

4. Pumpe nach einem der vorhergehenden Ansprüche, **dadurch gekennzeichnet, dass** die Prallwand (24) konkav gekrümmt ist.

5. Pumpe nach einem der vorhergehenden Ansprüche, **dadurch gekennzeichnet, dass** der Kanal (20, 201, 202, 203, 204), insbesondere über seine gesamte Breite, zu dem Wellenlager (16) hin offen ist.

6. Pumpe nach einem der vorhergehenden Ansprüche, **dadurch gekennzeichnet, dass** das Lagerschild (14) mehrere Kanäle (20, 201, 202, 203, 204) aufweist, und dass die Aufnahme (17) mehrere Segmente (21) aufweist, die derart ringförmig nebeneinander angeordnet sind, dass jeweils zwischen zwei nebeneinander angeordneten Segmenten (21) einer der Kanäle (20, 201, 202, 203, 204) gebildet ist.

7. Pumpe nach Anspruch 6, **dadurch gekennzeichnet, dass** sich der Kanal (20, 201, 202, 203, 204) in Bezug auf die Welle (2) in radialer Richtung und/oder axialer Richtung über die gesamte Ausdehnung der zwei nebeneinander angeordneten Segmente (21) erstreckt.

8. Pumpe nach Anspruch 6 oder 7, **dadurch gekennzeichnet, dass** der Zwischenraum (19) durch die Segmente (21) begrenzt ist.

9. Pumpe nach einem der Ansprüche 6 bis 8, **dadurch gekennzeichnet, dass** zumindest einer der Kanäle (20) ein Einlasskanal (201) ist, der für das Fluid als Einlass in den Zwischenraum (19) dient, und dass zumindest einer der Kanäle (20) ein Auslasskanal ist (202, 203, 204), der für das Fluid als Auslass aus dem Zwischenraum (19) dient.

10. Pumpe nach Anspruch 9, **dadurch gekennzeichnet, dass** das Umlenkelement (22) an zumindest einem der den Einlasskanal (201) bildenden Segmente (21) angeformt ist.

11. Pumpe nach einem der Ansprüche 6 bis 10, **dadurch gekennzeichnet, dass** die Segmente (21) an dem Lagerschild (14) angeformt sind.

12. Haushaltsgerät mit einer Pumpe nach einem der vorhergehenden Ansprüche.

## Claims

1. Pump for a domestic appliance with a wet-running rotor motor (1) having a rotor chamber (5) in which a shaft (2) with a rotor (3) rotates in a fluid, wherein the rotor chamber (5) is bounded by a rotor housing jacket (23) and by an end panel (14) for mounting the shaft (2), wherein the end (15), which is remote from the pump, of the shaft (2) is mounted in the end panel (14), wherein the end panel (14) is constructed integrally with the rotor housing (4), wherein the end panel (14) has a mount (17) for a shaft bearing (16), which mount surrounds the shaft bearing (16) at its outer circumferential surface, wherein the end panel has a channel (20) to an intermediate space (19) formed between shaft end (15) and end panel (14) and/or between shaft bearing (16) and end panel (14), wherein the channel (20, 201, 202, 203, 204) is open towards the rotor chamber (5) and can be flowed through by the fluid present in the rotor chamber (5), **characterised in that** a deflecting element (22) is formed at the end plate (14) and/or at the mount (17) and serves for deflecting the fluid into the channel (20, 201), that the deflecting element (22) extends from the channel (20, 201) up to an outer edge of the end panel (14), that connected with the outer edge of the end panel (14) is the rotor housing jacket (23) of the rotor chamber (5), against which the fluid rotating with the rotor (3) is pressed by virtue of a centrifugal force, and that the deflecting element (22) is adapted to a flow direction of the fluid in the rotor chamber (5) by at least one curved baffle wall (24).

2. Pump according to claim 1, **characterised in that** the deflecting element (22) is arranged at the end panel (14) centrally with respect to the channel (201).

3. Pump according to claim 1 or 2, **characterised in that** a guide element (25) is arranged to be connected with, particularly formed at, the channel (20, 201) and serves for conducting the fluid into the channel (20, 201).

4. Pump according to any one of the preceding claims, **characterised in that** the baffle wall (24) is concavely curved.

5. Pump according to any one of the preceding claims, **characterised in that** the channel (20, 201, 202, 203, 204) is open, in particular over the entire width thereof, towards the shaft bearing (16).

6. Pump according to any one of the preceding claims, **characterised in that** the end panel (14) has several channels (20, 201, 202,203, 204) and that the mount (17) has several segments (21) which are arranged annularly adjacent to one another in such a manner that a respective one of the channels (20, 201, 202, 203, 204) is formed between each two segments (21) arranged adjacent to one another.

7. Pump according to claim 6, **characterised in that** the channel (20, 201, 202, 203, 204) extends with respect to the shaft (2) in radial direction and/or axial direction over the entire extent of the two segments (21) arranged adjacent to one another.

8. Pump according to claim 6 or 7, **characterised in that** the intermediate space (19) is bounded by the segments (21).

9. Pump according to any one of claims 6 to 8, **characterised in that** at least one of the channels (20) is an inlet channel (201) serving as an inlet for the fluid into the intermediate space (19) and that at least one of the channels (20) is an outlet channel (202, 203, 204) serving as an outlet for the fluid from the intermediate space (19).

10. Pump according to claim 9, **characterised in that** the deflecting element (22) is formed at at least one of the segments (21) forming the inlet channel (201).

11. Pump according to any one of claims 6 to 10, **characterised in that** the segments (21) are formed at the end panel (14).

12. Domestic appliance with a pump according to any one of the preceding claims.

## Revendications

1. Pompe pour un appareil électroménager comprenant un moteur à rotor type humide (1) qui présente une chambre de rotor (5) dans laquelle un arbre (2) muni d'un rotor (3) est en rotation dans un fluide, la chambre de rotor (5) étant limitée par une enveloppe de carter de rotor (23) et par un flasque (14) destiné au logement de l'arbre (2), l'extrémité (15) de l'arbre (2), détournée de la pompe, étant logée dans le flasque (14), le flasque (14) étant réalisé d'une seule pièce avec le carter de rotor (4), le flasque (14) présentant un logement (17) pour un palier d'arbre (16), lequel logement entoure le palier d'arbre (16) sur sa surface d'enveloppe extérieure, le flasque présentant un canal (20) vers un espace intermédiaire (19) formé entre l'extrémité de l'arbre (15) et le flasque (14) et/ou entre le palier d'arbre (16) et le flasque (14), le canal (20, 201, 202, 203, 204) étant ouvert en direction de la chambre de rotor (5) et pouvant être traversé par le fluide qui se trouve dans la chambre de rotor (5), **caractérisée en ce qu'**un élément de renvoi (22) est formé sur le flasque (14) et/ou sur le logement (17), cet élément de renvoi servant au renvoi du fluide dans le canal (20, 201), **en ce que** l'élément de renvoi (22) s'étend du canal (20, 201) jusqu'à un bord extérieur du flasque (14), **en ce que** l'enveloppe du carter de rotor (23) de la chambre de rotor (5) se raccorde au bord extérieur du flasque (14), sur laquelle le fluide en rotation avec le rotor (3) est pressé en raison d'une force centrifuge, et **en ce que** l'élément de renvoi (22) est adapté à un sens d'écoulement du fluide dans la chambre de rotor (5) par au moins une paroi déflectrice (24) courbée.

2. Pompe selon la revendication 1, **caractérisée en ce que** l'élément de renvoi (22) est disposé sur le flasque (14) de manière centrale par rapport au canal (201).

3. Pompe selon la revendication 1 ou 2, **caractérisée en ce qu'**un élément de guidage (25) est disposé en étant raccordé au canal (20, 201), notamment formé, cet élément de guidage servant à guider le fluide dans le canal (20, 201).

4. Pompe selon l'une quelconque des revendications précédentes, **caractérisée en ce que** la paroi déflectrice (24) est courbée de manière concave.

5. Pompe selon l'une quelconque des revendications précédentes, **caractérisée en ce que** le canal (20, 201, 202, 203, 204), notamment sur toute sa largeur, est ouvert vers le palier d'arbre (16).

6. Pompe selon l'une quelconque des revendications précédentes, **caractérisée en ce que** le flasque (14) présente plusieurs canaux (20, 201, 202, 203, 204), et **en ce que** le logement (17) présente plusieurs segments (21) qui sont disposés les uns à côté des autres en forme d'anneaux de manière à ce que l'un des canaux (20, 201, 202, 203, 204) soit respectivement formé entre deux segments (21) disposés l'un à côté de l'autre.

7. Pompe selon la revendication 6, **caractérisée en ce que** le canal (20, 201, 202, 203, 204), par rapport à l'arbre (2), s'étend en direction radiale et/ou en direction axiale sur tout l'étendue des deux segments (21) disposés l'un à côté de l'autre.

8. Pompe selon la revendication 6 ou 7, **caractérisée en ce que** l'espace intermédiaire (19) est limité par les segments (21).

9. Pompe selon l'une quelconque des revendications 6 à 8, **caractérisée en ce qu'**au moins un des canaux (20) est un canal d'admission (201) qui sert au fluide d'entrée dans l'espace intermédiaire (19), et **en ce qu'**au moins un des canaux (20) est un canal de sortie (202, 203, 204) qui sert au fluide de sortie hors de l'espace intermédiaire (19).

10. Pompe selon la revendication 9, **caractérisée en ce que** l'élément de renvoi (22) est formé sur au moins un des segments (21) formant le canal d'entrée (201).

11. Pompe selon l'une quelconque des revendications 6 à 10, **caractérisée en ce que** les segments (21) sont formés sur le flasque (14).

12. Appareil électroménager comprenant une pompe selon l'une quelconque des revendications précédentes.
